# EUROPÄISCHE PATENTANMELDUNG

(11) **EP 3 086 054 A1**
(43) Veröffentlichungstag der Anmeldung: **26.10.2016**
(21) Anmeldenummer: 16000727.4
(22) Anmeldetag: 30.03.2016
(51) Int. Cl.: F24H 1/06, B60D 1/155, B60D 1/54, B62D 61/12

(54) **BAUEINHEIT AUS MOBILER TEMPERIERVORRICHTUNG UND ANHÄNGERSTRASSENFAHRZEUG MIT VERSTELLBAREM NIVEAU**

(30) Priorität: 22.04.2015 DE 102015005103
(71) Anmelder: mobiheat GmbH, 86316 Friedberg/Derching (DE)
(72) Erfinder: Schäffer, Helmut, D-86161 Augsburg (DE)
(74) Vertreter: Wiedemann, Markus

(57) **Zusammenfassung**

Die Erfindung betrifft eine mobile Temperiervorrichtung (2) mit einer Heiz- und/oder Kühleinrichtung zur Zufuhr oder Abfuhr von Wärme in Bezug auf ein zu heizendes und/oder zu kühlendes Medium, einem Vorlaufanschluss und einem Rücklaufan-schluss für das Medium.

Die Erfindung sieht vor, dass die Temperiereinrichtung eine Baueinheit (1) zusammen mit einem Anhängerstraßenfahrzeug (4) bildet, welches ein Chassis (14) und durch Achselemente (18, 20) am Chassis (14) gelagerte Räder (6, 8) aufweist und welches für einen Fahrbetrieb auf öffentlichen Straßen und abseits davon zum Ankoppeln an ein angetriebenes Zugfahrzeug vorgesehen ist, wobei die Räder (6, 8) im Fahrbetrieb Kontakt mit dem Untergrund oder der Straße aufweisen, und wobei die Baueinheit (1) eine Verstelleinrichtung (26) zum Verstellen der Position der Achselemente (18, 20) zusammen mit den Rädern (6, 8) relativ zum Chassis (14) aufweist, wobei die Achselemente (18, 20) zusammen mit den Rädern (6, 8) mittels der Verstelleinrichtung (26) gegenüber dem Chassis (14) derart verstellbar sind, dass die Räder (6, 8) wenigstens in einer Fahrstellung der Baueinheit (1) Bodenkontakt aufweisen und ein Fahrniveau (F) des Chassis (14) herstellen, welches den Fahrbetrieb auf öffentlichen Straßen und abseits davon ermöglicht, aber die Räder (6, 8) in einer Verlade- oder Transportstellung der Baueinheit (1) keinen Bodenkontakt aufweisen, in welcher die Baueinheit (1) dann mittels einer integrierten Stützeinrichtung (36) gegenüber dem Boden oder der Straße auf einem gegenüber dem Fahrniveau niedrigeren Transport- oder Verladeniveau (T) abgestützt ist, welches sich oberhalb des Untergrunds oder der Straße befindet.

## Beschreibung

### Stand der Technik

Die Erfindung geht aus von einer mobilen Temperiervorrichtung mit einer Heiz- und/oder Kühleinrichtung zur Zufuhr oder Abfuhr von Wärme in Bezug auf ein zu heizendes und/oder zu kühlendes Medium, einem Vorlaufanschluss und einem Rücklaufanschluss für das Medium, gemäß dem Oberbegriff von Anspruch 1.

Solche mobilen Temperiervorrichtungen sind für den Fall, dass mit Ihnen z.B. ein Gebäude beheizt werden soll, auch als mobile Kleinheizzentralen bekannt und beispielsweise in DE 20 2012 004 990 U1 beschrieben. Sie weisen eine elektrische oder eine auf fossilen Brennstoffen basierende Heizeinrichtung auf, welche ein flüssiges Medium, zumeist Wasser beiheizt, welches mittels des Rücklaufanschlusses, z.B. einer Schlauchkupplung von einem Wasserkreislauf des Gebäudes zugeführt, mittels der Heizeinrichtung erwärmt und dann durch die Pumpe über den Vorlaufanschluss, z.B. einer Schlauchkupplung in den Wasserkreislauf des Gebäudes rückgeführt wird. Der Wasserkreislauf im Gebäude ist beispielsweise Bestandteil einer Gebäudeheizung.

Ein Einsatz solcher mobilen Temperiervorrichtungen findet vor allem dann statt, wenn z.B. bei einer Heizungsmodernisierung in einem Wohn- oder Gewerbegebäude die Kesselanlage oder die Heizeinrichtung wie der Heizbrenner noch nicht eingebaut, ausgetauscht wird oder ausgefallen ist, aber eine Beheizung des Gebäudes weiterhin sichergestellt werden muss. Weiterhin können mit solchen mobilen Temperiervorrichtungen auch Heizkreisläufe in Wohn- oder Arbeitscontainern zu Heizzwecken mit warmem Wasser versorgt werden, die an Baustellen positioniert sind. Nicht zuletzt ist auch eine Beheizung von Brauchwasser möglich, z.B. auch von Wasser in Schwimmbecken.

Solche mobilen Temperiervorrichtungen sind in verschiedenen Leistungsstufen und Größen vorhanden und müssen von einem Unternehmen, welches sie herstellt, verleiht oder verkauft auf möglichst ökonomische Art zum Einsatzort beim Kunden befördert werden können.

Der vorliegenden Erfindung liegt daher die Aufgabe zugrunde, eine mobile Temperiervorrichtung der eingangs erwähnten Art derart fortzubilden, dass sie möglichst ökonomisch an ihren Einsatzort gelangen kann.

Diese Aufgabe wird erfindungsgemäß durch die Merkmale von Anspruch 1 gelöst.

### Offenbarung der Erfindung

Unter einer Temperiervorrichtung soll eine Vorrichtung verstanden werden, mit welcher das Medium, beispielsweise Wasser beheizt und/oder gekühlt werden kann, so dass die mobile Temperiervorrichtung eine Heizeinrichtung, eine Kühleinrichtung oder eine kombinierte Heiz-/und Kühleinrichtung sein kann. Das Medium ist beliebig und kann flüssig und/oder gasförmig sein.

Die Erfindung schlägt zunächst vor, dass die die mobile Temperiervorrichtung eine Baueinheit zusammen mit einem Anhängerstraßenfahrzeug bildet, welches ein Chassis und durch Achselemente am Chassis gelagerte Räder aufweist und welches für einen Fahrbetrieb auf öffentlichen Straßen und abseits davon zum Ankoppeln an ein angetriebenes Zugfahrzeug vorgesehen ist, wobei die Räder im Fahrbetrieb Kontakt mit dem Untergrund oder der Straße aufweisen.

Für einen Fahrbetrieb auf öffentlichen Straßen zum Ankoppeln an ein angetriebenes Zugfahrzeug vorgesehen bedeutet, dass die Baueinheit bzw. dessen Anhängerstraßenfahrzeug selbst antriebslos ist und durch ein über einen Antrieb verfügendes Zugfahrzeug gezogen werden muss, um auf öffentlichen Straßen and abseits davon, z.B. auf Baustellen oder im Gelände transportiert werden zu können. Weiterhin bedeutet dies, dass die Baueinheit bzw. das Anhängerstraßenfahrzeug alle Eigenschaften aufweisen muss, welche eine Zulassung für einen Betrieb im öffentlichen Straßenverkehr voraussetzen. Zwar ist keine Mindestbodenfreiheit oder Mindestgröße der Räder vorgeschrieben. Jedoch müssen Hindernisse von 800 mm Breite und einer Höhe von 110 mm mittig berührungslos überfahren werden können. Weil jedoch eine mobile Temperiervorrichtung oft an Baustellen mit unebenem Untergrund oder auch im Gelände befördert werden müssen und ein Kontakt des Chassis oder einer Achse mit dem Untergrund zu vermeiden ist, ist eine gewisse Mindestbodenfreiheit der Baueinheit im Fahrbetrieb notwendig. Als günstig hat sich eine Bodenfreiheit der Baueinheit von beispielsweise mehr als 300 mm herausgestellt, was auch einen gewissen Durchmesser der Räder bedingt.

Unter einer Baueinheit soll hier eine Einheit aus mobiler Temperiervorrichtung und Anhängerstraßenfahrzeug verstanden werden, welche beispielsweise dadurch zustande kommt, dass die Temperiervorrichtung auf dem Anhängerstraßenfahrzeug angeordnet wird. Diese Anordnung beinhaltet beispielsweise eine lösbare Befestigung der Temperiervorrichtung auf dem Anhängerstraßenfahrzeug bzw. auf oder an dessen Chassis. Das Chassis oder der Rahmen des Anhängerstraßenfahrzeugs ist daher (auch) bevorzugt als Chassis oder Rahmen der Baueinheit zu betrachten. Vorteilhaft ist dabei, dass als Ausgangsbasis für die Baueinheit übliche Anhängerstraßenfahrzeuge verwendet werden können, so dass sich der konstruktive Aufwand in Grenzen hält.

Um eine solche mobile Temperiervorrichtung an ihren Einsatzort zu befördern, nutzt die Erfindung in vorteilhafter Weise bereits vorhandene Logistikketten, welche einerseits an Ankoppeln der mobilen Temperiervorrichtung bzw. von dessen Anhängerstraßenfahrzeugteil an ein Zugfahrzeug z.B. einen PKW oder an ein Nutzfahrzeug beinhalten wie aber auch einen Transport auf Schienenfahrzeugen, im Flugzeug oder auf einem LKW. In Bezug auf Letzteres muss die mobile Temperiervorrichtung auf möglichst einfache Weise auf einem Schienenfahrzeug, einem Flugzeug oder einem LKW verladbar sein. Hierzu verfügen Logistikunternehmen aber meist nur über einfache Gabelhubwagen mit einer maximalen Hubhöhe von bis zu 200 mm, so dass in Anbetracht der oben erwähnten erforderlichen Mindestbodenfreiheit der Baueinheit eine Gabel eines Gabelhubwagens zwar den Boden des Chassis der Baueinheit untergreifen, ihn aber zum Anheben der Baueinheit nicht kontaktieren kann, weil noch ein lichtes Maß zwischen maximal hochgefahrener Gabel und dem Boden des Chassis vorhanden ist.

Zur Lösung dieses Problems schlägt die Erfindung weiterhin vor, dass die Baueinheit eine beispielsweise manuell bedienbare Verstelleinrichtung zum Verstellen der Position der Achselemente zusammen mit den Rädern relativ zum Chassis aufweist, wobei die Achselemente zusammen mit den Rädern mittels der Verstelleinrichtung gegenüber dem Chassis derart verstellbar sind, dass die Räder wenigstens in einer Fahrstellung der Baueinheit Bodenkontakt aufweisen und ein Fahrniveau des Chassis, insbesondere von dessen Boden herstellen, welches den Fahrbetrieb auf öffentlichen Straßen und abseits davon ermöglicht.

Hingegen weisen die Räder aber in einer Verlade- oder Transportstellung der Baueinheit keinen Bodenkontakt auf, in welcher die Baueinheit dann mittels einer integrierten Stützeinrichtung gegenüber dem Untergrund oder der Straße auf einem gegenüber dem Fahrniveau niedrigeren Transport- oder Verladeniveau abgestützt ist, welches sich aber oberhalb des Untergrunds oder der Straße befindet. Genauer weist dann ein Boden des Chassis ein gegenüber dem Fahrniveau niedrigeres Transport- oder Verladeniveau T auf, welches sich oberhalb des Untergrunds oder der Straße befindet.

Integrierte Stützeinrichtung bedeutet, dass die Stützeinrichtung einen Bestandteil der Baueinheit darstellt.

Durch die in den Unteransprüchen aufgeführten Maßnahmen sind vorteilhafte Weiterbildungen und Verbesserungen der in Anspruch 1 angegebenen Erfindung möglich.

Das Transport- oder Verladeniveau ist dabei vorzugsweise derart bemessen, dass in der Verlade- oder Transportstellung der Baueinheit ein Aufnahmeelement eines Flurfördergeräts den Boden des Chassis untergreifen und kontaktieren kann, um die Baueinheit durch das Flurfördergerät zu transportieren.

Insbesondere kann das Transport- oder Verladeniveau derart bemessen sein, dass in der Verlade- oder Transportstellung der Baueinheit ein Untergreifen und Kontaktieren des Bodens des Chassis der Baueinheit durch eine Gabel eines Gabelhubwagens oder eines Gabelstaplers ermöglicht wird, um die Baueinheit durch den Gabelhubwagen oder den Gabelstapler zu transportieren.

Gemäß einer Weiterbildung kann vorgesehen sein, dass an der zum Untergrund oder der Strasse weisenden Fläche des Bodens des Chassis wenigstens eine Ansatzfläche für eine Gabel eines Gabelhubwagens oder eines Gabelstaplers ausgebildet ist.

Insbesondere kann das Transport- oder Verladeniveau derart bemessen sein, dass in der Verlade- oder Transportstellung der Baueinheit der Boden des Chassis eine vertikale Entfernung von maximal 200 mm vom Untergrund oder von der Straße aufweist. Da wie bereits oben erwähnt, übliche Gabelhubwagen eine relativ geringe maximale Hubhöhe von ca. 200 mm aufweisen, wird es durch das relativ niedrige Transport- oder Verladeniveau der Baueinheit möglich, die Baueinheit bei eingefahrenen oder eingeklappten Achselementen bzw. Rädern insgesamt mit einem solchen Gabelhubwagen zu befördern, um sie beispielsweise auf eine Ladefläche eines LKW zu verladen. Mit Hilfe der dann ausgefahrenen oder ausgeklappten Stützeinrichtung wird dann Standsicherheit der Baueinheit auf der Ladefläche gewährleistet.

Mittels der manuell bedienbaren Verstelleinrichtung kann daher das Transport- oder Verladeniveau der Baueinheit vor Ort durch eine Bedienperson eingestellt werden, um die Baueinheit komplett durch ein Flurfördergerät aufzunehmen und zu mit diesem zu transportieren. Auf diese Weise ergibt sich daher eine flexibel transportierbare Temperiervorrichtung, die insbesondere ohne eigenen Transporteinsatz des herstellenden, verleihenden oder verkaufenden Unternehmens mittels üblicher Logistikdienstleister oder durch den Kunden selbst an seinen Einsatzort befördert werden kann.

Besonders bevorzugt weist die Baueinheit eine am Chassis derart gelenkig gelagerte Zugdeichsel auf, dass die Zugdeichsel horizontal und vertikal klappbar und in der vertikalen und in der horizontalen Position verriegelbar ist. Dabei befindet sich die Zugdeichsel in der Fahrstellung oder im Fahrbetrieb in der horizontalen Position und kann in der Verlade- oder Transportstellung der Baueinheit entweder vertikal nach oben geklappt oder in die Horizontale Position geklappt sein.

Alternativ kann die Baueinheit eine gegenüber dem Chassis horizontal derart ein- und ausfahrbare Zugdeichsel aufweisen, dass die Zugdeichsel in der Fahrstellung der Baueinheit sich gegenüber dem Chassis in ausgefahrener Stellung und in der Verlade- oder Transportstellung der Baueinheit gegenüber dem Chassis in eingefahrener oder in ausgefahrener Stellung befindet.

In beiden Fällen wird eine kompakte Bauform der Baueinheit erzielt, insbesondere wenn sich diese in der Transport- oder Verladestellung mit zusammen mit den Rädern eingefahrenen oder eingeklappten Achselementen und vertikal hochgeklappter Zugdeichsel befindet.

Dabei kann die Stützeinrichtung an der Zugdeichsel wenigstens ein vertikal ein- und ausfahrbares und gegenüber einer vertikalen Achse schwenkbares Stützrad beinhalten. Das Stützrad als Bestandteil der Stützeinrichtung sorgt dann zusammen mit weiteren Stützelementen für eine statisch bestimmte Abstützung der Baueinheit. Weiterhin weisen übliche Anhängerstraßenfahrzeuge ohnehin ein solches Stützrad an der Zugdeichsel auf, so dass diese Weiterbildung keinen zusätzlichen konstruktiven Aufwand bedingt.

Besonders bevorzugt sind wenigstens ein an einem rechten Achselement gelagertes rechtes Rad und wenigstens ein an einem linken Achselement gelagertes linkes Rad vorgesehen. Dann liegt eine quasi einachsige Baueinheit mit zwei Rädern vor, wobei die beiden Achselemente Bestandteile der Achse sind oder diese bilden.

Vorzugsweise sind gegenüber dem Chassis ein- und ausschwenkbare Achselemente vorgesehen, wobei diese wenigstens in der Fahrstellung gegenüber dem Chassis ausgeschwenkt und in der Verlade- oder Transportstellung eingeschwenkt sind.

Die Schwenkachsen der ein- und ausschwenkbaren Achselemente sind dabei bevorzugt parallel zur Fahrtrichtung oder zu einer Längsachse der Baueinheit angeordnet, derart, dass im eingeklappten Zustand die Achselemente zusammen mit wenigstens den Rädern nach innen geklappt und die Räder dann wenigstens teilweise unter einem Boden des Chassis und mit ihren zu den Radachse senkrechten Radflächen im Wesentlichen parallel zu diesem angeordnet sind, und im ausgeklappten Zustand die Achselemente zusammen mit wenigstens den Rädern nach außen geklappt sind und dann die Räder mit ihren zu den Radachsen senkrechten Radflächen im Wesentlichen senkrecht auf der Straße oder auf dem Untergrund aufstehen. In einem solchen Fall existiert daher keine durchgehende Achse für die Räder, sondern die Achse stellt eine gedachte Achse, zu welcher die Lagerungen der beiden Achselemente für die Räder im ausgeklappten Zustand koaxial sind. Dadurch ergibt sich gerade im eingeklappten Zustand eine sehr kompakte Bauform, welche sich leicht transportieren lässt.

Alternativ können die Schwenkachsen der ein- und ausschwenkbaren Achselemente auch senkrecht zur Fahrtrichtung oder zu einer Längsachse der Baueinheit angeordnet sein. In einem solchen Fall kann eine durchgehende Achse für die Räder verwendet werden, die dann beispielsweise in Fahrtrichtung gesehen nach vorne oben oder nach hinten oben geklappt wird, um den eingeklappten Zustand zu erreichen.

Auch oder zusätzlich können gegenüber dem Chassis vertikal ein- und ausfahrbare Achselemente vorgesehen sein, um die Räder bei wirksamer Stützeinrichtung vom Untergrund oder der Strasse abzuheben. In diesem Fall können Achselemente beispielsweise teleskopartig vertikal ein- und ausfahrbar sein.

Insbesondere können die Achselemente eine gefederte Aufhängung der Räder beinhalten. Dies bedeutet, dass einerseits erste Achselemente vorhanden sind, an oder gegenüber welchen sich Federelemente abstützen, die sich ebenfalls an zweiten, die Räder tragenden Achselemente abstützen, wobei die ersten und zweiten Achselemente gegenüber dem Chassis gemeinsam verstellbar, insbesondere gegenüber dem Chassis gemeinsam verschwenkbar und/oder ein- und ausfahrbar ausgebildet sind. Mit anderen Worten sind die Achselemente zusammen mit der gefederten Aufhängung der Räder gegenüber dem Chassis verstellbar.

Bevorzugt beinhaltet die Stützeinrichtung gegenüber dem Chassis ein- und ausfahrbare oder ein- und ausklappbare Stützelemente, welche wenigstens in der Fahrstellung der Baueinheit eingefahren oder eingeklappt und in der Verlade- oder Transportstellung der Baueinheit ausgefahren oder ausgeklappt sind, um das Transport- oder Verladeniveau des Chassis herzustellen.

Gemäß einer Weiterbildung beinhaltet die Stützeinrichtung beispielsweise in vertikalen Rohren eines Rahmens des Chassis vertikal ein- und ausfahrbare Teleskopstützen, welche wenigstens in der Fahrstellung der Baueinheit eingefahren und in der Verlade- oder Transportstellung der Baueinheit ausgefahren sind. Die Rohre des Rahmens weisen dann eine vorteilhafte Doppelfunktion auf, indem sie einerseits das Tragegerüst für das Anhängerstrassenfahrzeug bzw. für die Temperiervorrichtung bzw. für die Baueinheit z.B. als Teil eines Rohrrahmens und andererseits Führungselemente für die Teleskopstützen als Stützelemente ausbilden. Die Rohre können dabei beispielsweise einen viereckigen oder runden Querschnitt aufweisen.

Gemäß einer Weiterbildung wird insbesondere die Heiz- und/oder Kühleinrichtung vom Chassis oder von einem Rahmen des Anhängerstraßenfahrzeugs getragen, wobei an dem Rahmen oder Chassis Gehäuse- und/oder Verkleidungselemente der Heiz- und/oder Kühleinrichtung angeordnet sind.

Wie oben bereits angedeutet, kann die Baueinheit ein gemeinsames Chassis oder einem gemeinsamen Rahmen, insbesondere einen gemeinsamen Rohrrahmen für die Temperiereinrichtung und das Anhängerstraßenfahrzeug aufweisen, so dass für die Temperiereinrichtung kein zusätzlicher Rahmen erforderlich ist.

Besonders bevorzugt weist die Verstelleinrichtung wenigstens einen Mutter-/Spindeltrieb als Bestandteil eines Getriebes auf, welches eine manuell eingeleitete Drehung der Spindel in eine Verstellbewegung der Achselemente wandelt. Dann kann das Fahrstellung bzw. das Verlade- oder Transportniveau der Baueinheit durch einfaches Verdrehen der Spindel des Mutter-/Spindeltriebs hergestellt werden.

Gemäß einer Weiterbildung kann die mobile Temperiereinrichtung eine elektrische Heiz- und/oder Kühleinrichtung mit einem elektrischen Anschluss zur Stromversorgung beinhalten. Alternativ ist jegliche Energieform zum Betreiben der Heiz- und/oder Kühleinrichtung denkbar, beispielsweise auch fossile Energieträger oder Solarenergie.

Besonders bevorzugt ist die mobile Temperiereinrichtung über den Vorlaufanschluss und den Rücklaufanschluss zum Anschluss an einen Temperiermittelkreislauf eines Gebäudes vorgesehen ist, insbesondere an einen Heizkreislauf eines Gebäudes, wobei als Gebäude jegliches Gebäude anzusehen ist, beispielsweise Wohn- oder Gewerbegebäude, Wohn- oder Arbeitscontainer usw..

### Zeichnung

Die Erfindung wird nachstehend anhand von Ausführungsbeispielen unter Bezugnahme auf die beigefügte Zeichnung näher beschrieben. Es zeigt
- Fig.1: eine Vorderansicht einer mobilen Baueinheit aus Temperiervorrichtung und Anhängerstraßenfahrzeug gemäß der Erfindung in bevorzugter Ausführungsform in einer Fahrstellung;
- Fig.2: eine Vorderansicht der mobilen Baueinheit von Fig.1 in einer Verladeoder Transportstellung;
- Fig.3: eine Seitenansicht der mobilen Baueinheit von Fig.1 in der Fahrstellung;
- Fig.4: eine Seitenansicht der mobilen Baueinheit von Fig.1 in der Verladeoder Transportstellung;
- Fig.5: eine Draufsicht der mobilen Baueinheit von Fig.1 in einem Parkzustand;

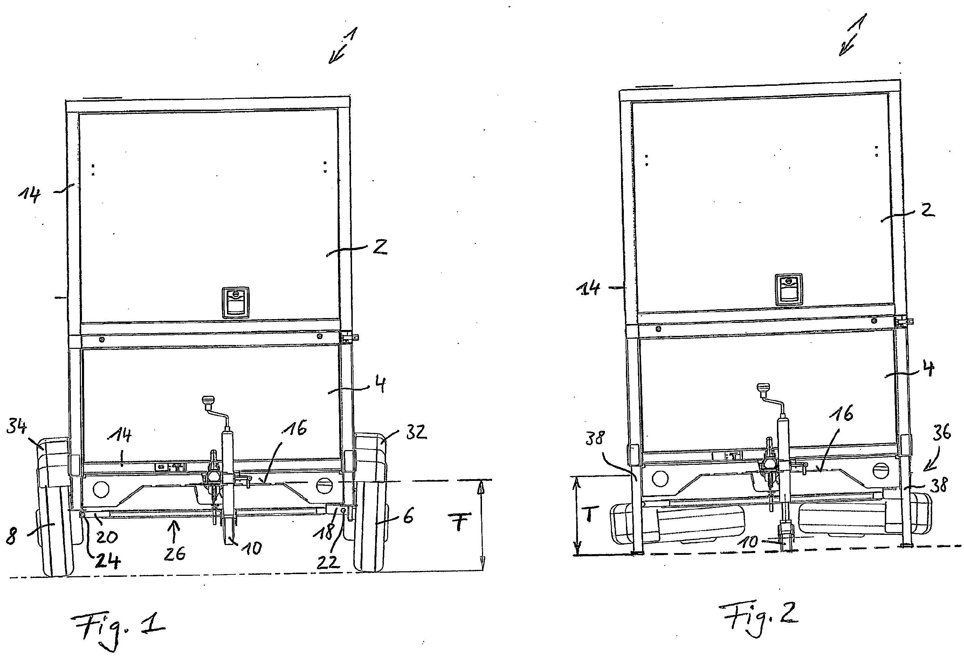

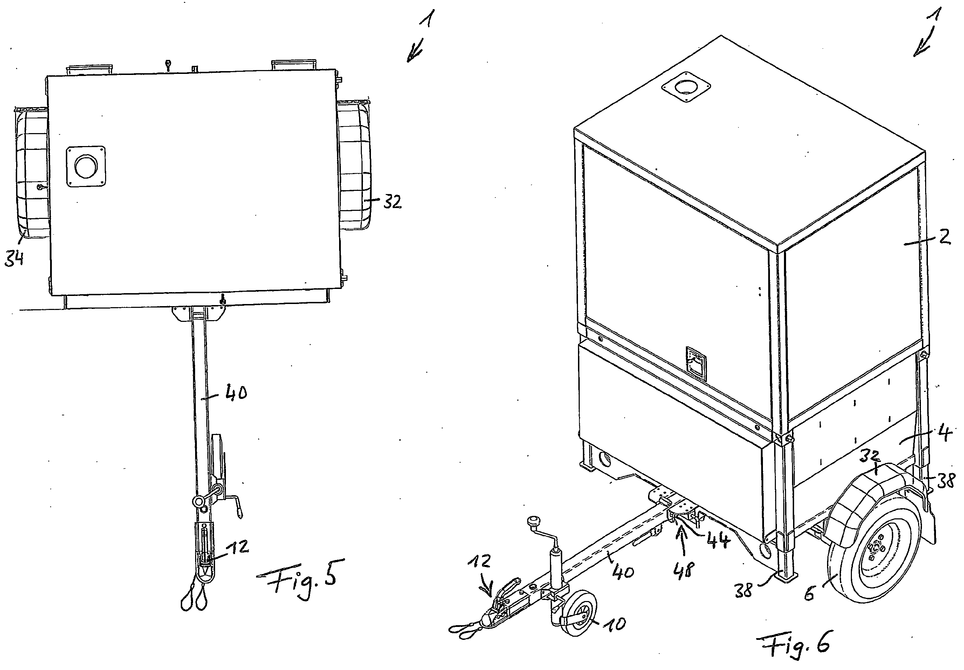

- Fig.5: eine perspektivische Ansicht der mobilen Baueinheit von Fig.1 im Parkzustand.

### Beschreibung des Ausführungsbeispiels

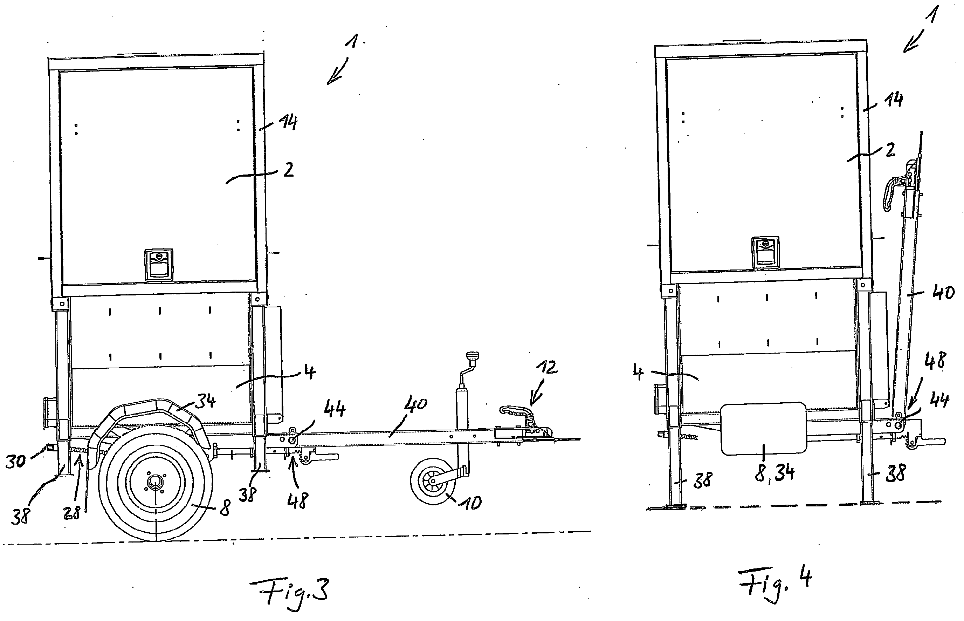

Figuren 1 und 3 zeigen eine Fahrstellung einer bevorzugten Ausführungsform einer erfindungsgemäßen mobilen Baueinheit 1 aus einer Temperiervorrichtung 2 und einem Anhängerstraßenfahrzeug 4. Die Fahrstellung bzw. ein Fahrbetrieb der Baueinheit beinhaltet einen typischen Fahrbetrieb eines Anhängerstraßenfahrzeugs 4 in einem an ein Zugfahrzeug angekoppelten Zustand und ein in Figuren 5 und 6 gezeigter Parkzustand der Baueinheit 1 einen vom Zugfahrzeug abgekoppelten Zustand der Baueinheit 1, wobei hier vorzugsweise alle Räder 6, 8, 10 der Baueinheit 1 die Straße oder den Untergrund berühren.

Die Temperiervorrichtung 2 ist hier beispielsweise eine Heizeinrichtung zum Beheizen von Wasser als umzuwälzendes Medium innerhalb Heizwasserkreislaufs eines Gebäudes. Zum Anschluss der Temperiervorrichtung 2 an den Heizwasserkreislauf sind ein hier nicht explizit gezeigter Vorlaufanschluss und ein Rücklaufanschluss vorgesehen, derart, dass zu beheizendes Wasser über den Rücklaufanschluss einer beispielsweise elektrischen Heizeinrichtung 2 zugeführt, in der Heizeinrichtung 2 erwärmt und dann über den Vorlaufanschluss wieder in den Heizwasserkreislauf des Gebäudes rückgeführt wird. Die Heizeinrichtung 2 weist dann einen hier ebenfalls nicht explizit gezeigten elektrischen Anschluss zur Zufuhr elektrischen Energie auf. Zum Umwälzen des Heizwassers weist die Heizeinrichtung eine Pumpe auf sowie einen Wärmetauscher, welcher den Wärmeübergang von der Heizeinrichtung 2 auf das in einer internen Leitung geführte Heizwasser bewerkstelligt. Die mobile Heizeinrichtung 2 bzw. die mobile Baueinheit 1 bildet dann im angeschlossenen Zustand einen Teil einer Heizvorrichtung beispielsweise eines Gebäudes oder eines Schwimmbads. Solche mobilen Heizeinrichtungen 2 sind auch als mobile Kleinheizzentralen bekannt. Anstatt zum Heizen kann die Temperiervorrichtung 2 auch zum kombinierten Heizen/Kühlen oder nur zum Kühlen des Mediums ausgebildet sein.

Das Anhängerstraßenfahrzeug 4 ist per se antriebslos und insgesamt so ausgebildet, dass es einerseits die Vorschriften der Straßenverkehrsordnung im Hinblick auf einen Betrieb auf öffentlichen Straßen und auch abseits davon erfüllt und andererseits über eine Kupplungseinrichtung, insbesondere über eine bei Anhängern übliche Kugelkopfkupplung 12 an ein oder von einem Zugfahrzeug an- und abkoppelbar ist. Zum Transport von einem Unternehmen, welches die Baueinheit 1 herstellt, vertreibt oder verleiht, an den Einsatzort, beispielsweise ein Gebäude kann dann die Baueinheit 1 wenigstens über einen Teil der Strecke im Ganzen von einem Zugfahrzeug wie einem PKW oder Nutzfahrzeug gezogen werden.

Hier sind beispielsweise die Baugruppen und Bauelemente der Heizeinrichtung 2 auf dem Anhängerstraßenfahrzeug 4 angeordnet, indem die beispielsweise elektrische Heizeinrichtung 2 von einem Chassis 14 oder Rahmen 14 des Anhängerstraßenfährzeugs 4 getragen wird, insbesondere sind deren Bauteile und Baugruppen am rahmen 14 lösbar befestigt. Somit bildet der Rahmen bzw. das Chassis 14 des Anhängerstraßenfahrzeugs 4 gleichsam den Rahmen oder das Chassis 14 der mobilen Temperiervorrichtung 2 bzw. der mobilen Heizeinrichtung 2 aus. Das Chassis bzw. der Rahmen 14 der Baueinheit 1 ist hier beispielsweise ein aus beispielsweise Vierkantrohren gefertigter Rohrrahmen, welcher neben Verkleidungs- oder Aufbauteilen der Baueinheit 1 auch einen Boden 16 trägt, welcher durch Längs- oder Querstreben verstärkt sein kann. Unter Boden 16 oder Bodenfläche soll die vertikal niedrigste Fläche des Chassis 14 der Baueinheit 1 verstanden werden.

An dem Boden 16 sind hier beispielsweise zwei Achselemente 18, 20 beispielsweise parallel zu einer Längsmittelachse (parallel zur Fahrtrichtung) der Baueinheit 1 angeordnete Schwenkachsen 22, 24 schwenkbar angeordnet, wobei ein rechtes Achselement 18 ein rechtes Rad 6 und ein linkes Achselement 20 ein linkes Rad 8 trägt. Die Schwenkachsen 22, 24 sind bevorzugt unterhalb des Bodens 16 angeordnet. Die schwenkbaren Achselemente 18, 20 beinhalten bevorzugt auch jeweils eine gefederte Aufhängung der Räder 6, 8, beispielsweise in Form von Drehstabfedern.

Die Achselemente 18, 20 sind zusammen mit den Rädern 6, 8 und bevorzugt auch mit deren gefederter Aufhängung mittels einer Verstelleinrichtung 26 von der in den Figuren 1, 3, 5 und 6 gezeigten Fahrstellung in eine in den Figuren 2 und 4 gezeigte Verlade- oder Transportstellung schwenkbar. Diese Verstelleinrichtung 26 ist von einer Bedienperson manuell bedienbar und beinhaltet eine am besten in Fig.3 sichtbaren Spindel-/Muttertrieb 28 als Bestandteil eines Getriebes, welches eine Drehbewegung der Spindel in eine Schwenkbewegung der Achselemente 18, 20 um deren Schwenkachsen 22, 24 wandelt. Die Spindel weist endseitig eine Ansatzfläche 30 für ein Werkzeug auf, mit welchem dann die Spindel in Drehbewegung versetzt werden kann.

In der in Figuren 2 und 4 gezeigte Verlade- oder Transportstellung sind die Achselemente 18, 20 zusammen mit den Rädern 6, 8 und bevorzugt auch deren gefederter Aufhängung nach innen geklappt und sind dann wenigstens teilweise unter dem Boden 16 und mit ihren zur Radachse senkrechten Radflächen im Wesentlichen parallel zum Boden 16 angeordnet.

Im ausgeklappten Zustand (Figuren 1, 3, 5 und 6, Fahrstellung bzw. Parkzustand) sind demgegenüber die Achselemente 18, 20 zusammen mit den Rädern 6, 8 und bevorzugt auch deren gefederter Aufhängung nach außen geklappt, wobei die Räder 6, 8 dann mit ihren zu den Radachsen senkrechten Radflächen bzw. mit dem Latsch der Radreifen im Wesentlichen senkrecht auf der Straße oder auf dem Untergrund aufstehen. Zusammen mit den Achselementen 18, 20, den Rädern 6, 8 und bevorzugt auch mit deren gefederter Aufhängung werden bevorzugt auch Radabdeckungen 32, 34 mitverschwenkt, welche in bekannter Weise einen Spritzschutz in Bezug auf die drehenden Räder 6, 8 bilden und per Straßenverkehrsordnung vorgeschrieben sind.

In der Fahrstellung bzw. im Parkzustand, d.h. im ausgeklappten Zustand der Achselemente 18, 20 wird dann ein Fahrniveau F des Chassis 14 bzw. eine Bodenfreiheit des Chassis 14 bzw. von dessen Boden 16 hergestellt, welches bzw. welche einen Fahrbetrieb der an ein Zugfahrzeug angekoppelten mobilen Baueinheit auf öffentlichen Straßen and abseits davon z.B. auf Baustellen oder im Gelände ermöglicht.

Von der Fahrstellung bzw. vom Fahrbetrieb zu unterscheiden ist der in Figuren 5 und 6 gezeigte stillstehende, vom Zugfahrzeug abgekoppelte Parkzustand der Baueinheit 1, in welchem die Baueinheit 1 beispielsweise durch eine integrierte Parkbremse im Stillstand gehalten wird.

Demgegenüber weisen die rechten und linken zum Fahren vorgesehenen Räder 5, 6 in einer Verlade- oder Transportstellung der Baueinheit 1, in welcher die Achselemente 18, 20 sich zusammen mit den Rädern 6, 8 und auch bevorzugt mit deren gefederter Aufhängung im eingeklappten Zustand befinden, keinen Bodenkontakt auf. Die Baueinheit 1 wird dann mittels einer Stützeinrichtung 36 gegenüber dem Untergrund oder der Straße auf einem gegenüber dem Fahrniveau F niedrigeren Transport- oder Verladeniveau T abgestützt, welches sich aber oberhalb des Untergrunds oder der Straße befindet.

Die Stützeinrichtung 36 weist einerseits Stützelemente 38, z.B. in Form von Vierkantrohren auf, welche teleskopartig innerhalb von vertikalen, an den äußeren Kanten des Rahmens 14 angeordneten Vierkantrohren vertikal verstellbar gelagert sind. Andererseits beinhaltet die Stützeinrichtung 36 auch ein gegenüber einer Zugdeichsel 40 des Anhängerstraßenfahrzeugs 4 vertikal ein- und ausfahrbares Stützrad 10, wobei die Zugdeichsel 40 am Rahmen 14 bevorzugt um eine quer zur Fahrrichtung oder Längsmittelachse angeordnete Schwenkachse 44 in einem Gelenk 48 von einer horizontalen Fahrstellung (Figuren 1, 3, 5 und 6) in eine vertikale Verlade- oder Transportstellung (Fig.4) klappbar ist. In der Fahrstellung bzw. im Fahrbetrieb wie auch im Parkzustand ist die Zugdeichsel 40 in die horizontale Position geklappt und das Gelenk 48 verriegelt. In der Verlade- oder Transportstellung kann die Zugdeichsel 40 entweder in die horizontale Position (Fig.2) oder in die vertikale Position geklappt (Fig.4) und dann das Gelenk 48 in der jeweiligen Position verriegelt sein, je nachdem welche Anforderungen im Hinblick auf die Transportlänge der Baueinheit 1 gestellt werden.

Am freien Ende der Zugdeichsel 40 ist eine übliche Kugelkopfkupplung 12 angeordnet, über welche die Baueinheit 1 dann an das Zugfahrzeug anhängt werden kann. Die hier beispielsweise vier vertikal verstellbaren Stützelemente 38 am Chassis 14 können zusammen mit dem vertikal verstellbaren Stützrad 10 durch eine Bedienperson manuell am Chassis oder Rahmen 14 bzw. an der Zugdeichsel 40 fixiert werden, beispielsweise über Querbolzen oder Klemmung.

Im Parkzustand der Baueinheit sind dann die Stützelemente 38 eingefahren, aber das Stützrad 10 ausgefahren (Figuren 5 und 6), im Fahrbetrieb oder in der Fahrstellung die Stützelemente 38 und das Stützrad 10 eingefahren (Figuren 1 und 3) und in der Verlade- oder Transportstellung die Stützelemente 38 ausgefahren und das Stützrad 10 entweder ausgefahren (Fig.2) oder eingefahren bzw. die Zugdeichsel 40 zusammen mit dem Stützrad 10 hochgeklappt (Fig.4).

Anstatt durch Verschwenken können die Achselemente 18, 20 zusammen mit den Rädern 6, 8 auf jegliche andere Art gegenüber dem Chassis oder Rahmen 14 der Baueinheit 1 verstellbar ausgebildet sein, um einerseits das Fahrniveau F und andererseits das niedrigere Transport- oder Verladeniveau T der Baueinheit 1 bzw. von deren Boden 16 einzustellen. Denkbar ist etwa auch, dass die Achselemente 18, 20 für die Räder 6, 8 Bestandteile einer von rechts nach links durchgehenden Achse sind, die dann gegenüber einer senkrecht zur Längsmittelachse der Baueinheit 1 angeordneten Schwenkachse verschwenkbar ist.

Das niedrigere Transport- oder Verladeniveau T der Baueinheit 1 bzw. von deren Boden 16 zeichnet sich dadurch aus, dass ein Aufnahmeelement eines Flurfördergeräts den Boden 16 des Chassis 14 bzw. der Baueinheit 1 untergreifen und kontaktieren kann, um die Baueinheit 1 durch das Flurfördergerät zu transportieren. Insbesondere ist das Transport- oder Verladeniveau derart bemessen, dass ein Untergreifen und Kontaktieren des Bodens 16 der Baueinheit 1 durch eine Gabel eines Gabelhubwagens oder eines Gabelstaplers ermöglicht wird, um die Baueinheit 1 durch den Gabelhubwagen oder den Gabelstapler zu transportieren. Insbesondere kann an der zur Strasse oder dem Untergrund weisenden Seite des für Bodens 16 wenigstens eine auch beispielsweise speziell ausformte Ansatzfläche für das Aufnahmeelement eines Flurfördergeräts und insbesondere für eine Gabel eines Gabelhubwagens oder den Gabelstaplers vorgesehen sein.

Insbesondere ist das Transport- oder Verladeniveau T derart bemessen, dass in der Verlade- oder Transportstellung der Baueinheit 1 der Boden 16 des Chassis 14 eine vertikale Entfernung von maximal 200 mm vom Untergrund oder von der Straße aufweist.

Dadurch wird ein Verladen der Baueinheit 1 auf einer Ladefläche z.B. eines LKW, eines Schienenfahrzeugs oder eines Flugzeugs auch mit Hilfe von Flurfördergeräten mit geringer maximaler Hubhöhe möglich, bei welchen zwar ein Untergreifen des Bodens 16 mit dem Aufnahmeelement bzw. der Gabel des Flurfördergeräts zwar möglich aber ein Kontakt mit dem Boden 16 der Baueinheit 1 wegen einer zu geringen Hubhöhe nicht gegeben wäre. Damit kommt die Baueinheit 1 in der Verlade- oder Transportstellung in vertikaler Richtung gesehen quasi dem Aufnahmeelement des Flurfördergeräts entgegen.

Damit kann die Baueinheit 1 flexibel und ohne weiteres Zubehör von einer Bedienperson manuell von der Fahrstellung in die Verlade- oder Transportstellung eingestellt werden. Je nach Logistikkette innerhalb der Transportstrecke vom Hersteller, Vertreiber oder Verleiher der Baueinheit 1 bis zum Einsatzort oder zurück kann dann die Baueinheit individuell an das jeweils vorhandene Transportmittel, z.B. Zugbetrieb am PKW, Transportbetrieb auf dem LKW angepasst werden.

Anstatt nur zwei, zusammen mit zwei Rädern ein- und ausschwenkbare bzw. ein- und ausfahrbare Achsschenkel kann je nach zugelassener Achselast eine beliebige Anzahl von Achsschenkeln und Rädern vorgesehen sein, darunter auch Doppelachsen und Zwillingsräder.

### Bezugszeichenliste

- 1: Baueinheit
- 2: Temperiervorrichtung
- 4: Anhängerstraßenfahrzeug
- 6: Rad
- 8: Rad
- 10: Stützrad
- 12: Kugelkopfkupplung
- 14: Rahmen
- 16: Boden
- 18: Achselement
- 20: Achselement
- 22: Schwenkachse
- 24: Schwenkachse
- 26: Verstelleinrichtung
- 28: Mutter-/Spindeltrieb
- 30: Ansatzfläche
- 32: Radabdeckung
- 34: Radabdeckung
- 36: Stützeinrichtung
- 38: Stützelemente
- 40: Zugdeichsel
- 44: Schwenkachse
- 48: Gelenk

## Patentansprüche

1. Mobile Temperiervorrichtung (2) mit einer Heiz- und/oder Kühleinrichtung zur Zufuhr oder Abfuhr von Wärme in Bezug auf ein zu heizendes und/oder zu kühlendes Medium, einem Vorlaufanschluss und einem Rücklaufanschluss für das Medium, **dadurch gekennzeichnet, dass**
a) sie eine Baueinheit (1) zusammen mit einem Anhängerstraßenfahrzeug (4) bildet, welches ein Chassis (14) und durch Achselemente (18, 20) am Chassis (14) gelagerte Räder (6, 8) aufweist und welches für einen Fahrbetrieb auf öffentlichen Straßen und abseits davon zum Ankoppeln an ein angetriebenes Zugfahrzeug vorgesehen ist, wobei die Räder (6, 8) im Fahrbetrieb Kontakt mit dem Untergrund oder der Straße aufweisen, und wobei
b) die Baueinheit (1) eine Verstelleinrichtung (26) zum Verstellen der Position der Achselemente (18, 20) zusammen mit den Rädern (6, 8) relativ zum Chassis (14) aufweist, wobei
c) die Achselemente (18, 20) zusammen mit den Rädern (6, 8) mittels der Verstelleinrichtung (26) gegenüber dem Chassis (14) derart verstellbar sind, dass die Räder (6, 8)
b1) wenigstens in einer Fahrstellung der Baueinheit (1) Bodenkontakt aufweisen und ein Fahrniveau (F) eines Bodens (16) des Chassis (14) herstellen, welches den Fahrbetrieb auf öffentlichen Straßen und abseits davon ermöglicht, aber die Räder (6, 8)
b2) in einer Verlade- oder Transportstellung der Baueinheit (1) keinen Bodenkontakt aufweisen, in welcher die Baueinheit (1) dann mittels einer integrierten Stützeinrichtung (36) gegenüber dem Untergrund oder der Straße abgestützt ist, wobei dann der Boden (16) des Chassis (14) ein gegenüber dem Fahrniveau (F) niedrigeres Transport- oder Verladeniveau (T) aufweist, welches sich oberhalb des Untergrunds oder der Straße befindet.

2. Mobile Temperiervorrichtung nach Anspruch 1, **dadurch gekennzeichnet, dass** das Transport- oder Verladeniveau (T) derart bemessen ist, dass in der Verlade- oder Transportstellung der Baueinheit (1) ein Aufnahmeelement eines Flurfördergeräts den Boden (16) des Chassis (14) untergreifen und kontaktieren kann, um die Baueinheit (1) durch das Flurfördergerät zu transportieren.

3. Mobile Temperiervorrichtung nach Anspruch 1 oder 2, **dadurch gekennzeichnet, dass** das Transport- oder Verladeniveau (T) derart bemessen ist, dass in der Verlade- oder Transportstellung der Baueinheit (1) ein Untergreifen und Kontaktieren des Bodens (16) des Chassis (14) der Baueinheit (1) durch eine Gabel eines Gabelhubwagens oder eines Gabelstaplers ermöglicht wird, um die Baueinheit (1) durch den Gabelhubwagen oder den Gabelstapler zu transportieren.

4. Mobile Temperiervorrichtung nach Anspruch 3, **dadurch gekennzeichnet, dass** an der zum Untergrund oder der Strasse weisenden Fläche des Bodens (16) des Chassis (14) wenigstens eine Ansatzfläche für eine Gabel eines Gabelhubwagens oder eines Gabelstaplers ausgebildet ist.

5. Mobile Temperiervorrichtung nach einem der Ansprüche 1 bis 4, **dadurch gekennzeichnet, dass** das Transport- oder Verladeniveau (T) derart bemessen ist, dass in der Verlade- oder Transportstellung der Baueinheit (1) der Boden (16) des Chassis (14) eine vertikale Entfernung von maximal 200 mm vom Untergrund oder von der Straße aufweist.

6. Mobile Temperiervorrichtung nach einem der vorhergehenden Ansprüche, **dadurch gekennzeichnet, dass** die Baueinheit (1) eine am Chassis (14) derart gelenkig gelagerte Zugdeichsel (40) aufweist, dass die Zugdeichsel (40) horizontal und vertikal klappbar und jeweils in der horizontalen und vertikalen Position verriegelbar ist.

7. Mobile Temperiervorrichtung nach einem der Ansprüche 1 bis 5, **dadurch gekennzeichnet, dass** die Baueinheit (1) eine gegenüber dem Chassis (14) horizontal ein- und ausfahrbare Zugdeichsel aufweist.

8. Mobile Temperiervorrichtung nach Anspruch 6 oder 7, **dadurch gekennzeichnet, dass** die Stützeinrichtung (36) an der Zugdeichsel (40) wenigstens ein vertikal ein- und ausfahrbares und gegenüber einer vertikalen Achse schwenkbar gelagertes Stützrad (10) beinhaltet.

9. Mobile Temperiervorrichtung nach einem der vorhergehenden Ansprüche, **dadurch gekennzeichnet, dass** sie wenigstens ein an einem rechten Achselement (18) gelagertes rechtes Rad (6) und wenigstens ein an einem linken Achselement (20) gelagertes linkes Rad (8) aufweist.

10. Mobile Temperiervorrichtung nach einem der vorhergehenden Ansprüche, **dadurch gekennzeichnet, dass** die Stützeinrichtung (36) gegenüber dem Chassis (14) ein- und ausfahrbare oder ein- und ausklappbare Stützelemente (38) beinhaltet, welche wenigstens in der Fahrstellung der Baueinheit (1) eingefahren oder eingeklappt und in der Verlade- oder Transportstellung der Baueinheit (1) ausgefahren oder ausgeklappt sind, um das Transport- oder Verladeniveau (T) des Chassis herzustellen.

11. Mobile Temperiervorrichtung nach Anspruch 10, **dadurch gekennzeichnet, dass** die Stützeinrichtung (36) in vertikalen Rohren eines Rahmens (14) vertikal ein- und ausfahrbare Teleskopstützen (38) beinhaltet, welche wenigstens in der Fahrstellung der Baueinheit (1) eingefahren und in der Verlade- oder Transportstellung der Baueinheit (1) ausgefahren sind.

12. Mobile Temperiervorrichtung nach einem der vorhergehenden Ansprüche, **dadurch gekennzeichnet, dass** die Baueinheit (1) ein gemeinsames Chassis oder einen gemeinsamen Rahmen (14) für die Temperiereinrichtung (2) und das Anhängerstraßenfahrzeug (4) aufweist.

13. Mobile Temperiervorrichtung nach einem der vorhergehenden Ansprüche, **dadurch gekennzeichnet, dass** gegenüber dem Chassis (14) ein- und ausschwenkbare Achselemente (18, 20) vorgesehen sind.

14. Mobile Temperiervorrichtung nach Anspruch 13, **dadurch gekennzeichnet, dass** Schwenkachsen (22, 24) der ein- und ausschwenkbaren Achselemente (18, 20) parallel zur Fahrtrichtung oder zu einer Längsachse der Baueinheit (1) angeordnet sind, derart, dass
a) im eingeklappten Zustand die Achselemente (18, 20) zusammen mit wenigstens den Rädern (6, 8) nach innen geklappt und dann die Räder (6, 8) wenigstens teilweise unter einen Boden (16) des Chassis (14) und mit ihren zu den Radachsen senkrechten Radflächen im Wesentlichen parallel zu diesem angeordnet sind, und
b) im ausgeklappten Zustand die Achselemente(18, 20) zusammen mit wenigstens den Rädern (6, 8) nach außen geklappt sind und dann die Räder (6, 8) mit ihren zu den Radachsen senkrechten Radflächen im Wesentlichen senkrecht auf der Straße oder auf dem Untergrund aufstehen.

15. Mobile Temperiervorrichtung nach Anspruch 13, **dadurch gekennzeichnet, dass** die Schwenkachsen (22, 24) der ein- und ausschwenkbaren Achselemente (18, 20) senkrecht zur Fahrtrichtung oder zu einer Längsachse der Baueinheit (1) angeordnet sind.

16. Mobile Temperiervorrichtung nach einem der vorhergehenden Ansprüche, **dadurch gekennzeichnet, dass** gegenüber dem Chassis (14) vertikal ein- und ausfahrbare Achselemente vorgesehen sind.

17. Mobile Temperiervorrichtung nach einem der vorhergehenden Ansprüche, **dadurch gekennzeichnet, dass** die Achselemente (18, 20) eine gefederte Aufhängung der Räder (6, 8) beinhalten.

18. Mobile Temperiervorrichtung nach einem der vorhergehenden Ansprüche, **dadurch gekennzeichnet, dass** die Verstelleinrichtung (26) wenigstens einen Mutter-/Spindeltrieb (28) als Bestandteil eines Getriebes aufweist, welches eine Drehung der Spindel in eine Verstellbewegung der Achselemente (18, 20) wandelt.

19. Mobile Temperiervorrichtung nach einem der vorhergehenden Ansprüche, **dadurch gekennzeichnet, dass** sie eine elektrische Heiz- und/oder Kühleinrichtung mit einem elektrischen Anschluss zur Stromversorgung beinhaltet.

20. Mobile Temperiervorrichtung nach einem der vorhergehenden Ansprüche, **dadurch gekennzeichnet, dass** sie über den Vorlaufanschluss und den Rücklaufanschluss zum Anschluss an einen Temperiermittelkreislauf eines Gebäudes vorgesehen ist.

21. Mobile Temperiervorrichtung nach einem der vorhergehenden Ansprüche, **dadurch gekennzeichnet, dass** die Heiz- und/oder Kühleinrichtung vom Chassis oder von einem Rahmen (14) des Anhängerstraßenfahrzeugs (4) getragen wird, wobei an dem Chassis oder Rahmen (14) Gehäuse- und/oder Verkleidungselemente der Heiz- und/oder Kühleinrichtung angeordnet sind.

22. Mobile Temperiervorrichtung nach einem der vorhergehenden Ansprüche, **dadurch gekennzeichnet, dass** sie eine das Medium in Fluss versetzende Pumpe aufweist.
